# EUROPEAN PATENT APPLICATION

(11) **EP 2 747 317 A1**
(43) Date of publication of application: **25.06.2014**
(21) Application number: 12306607.8
(22) Date of filing: 18.12.2012
(51) Int. Cl.: H04J 3/22, H04J 4/00

(54) **Method of optical data transmission**

(71) Applicant: Alcatel Lucent, 75007 Paris (FR)
(72) Inventor: De Valicourt, Guilhem, 91620 Nozay (FR); Simonneau, Christian, 91620 Nozay (FR)
(74) Representative: Mildner, Volker

(57) **Abstract**

Proposed is a method of optical data transmission. Multiple optical TDM signals are received. The multiple optical TDM signals carry respective optical data packet sequences within respective synchronous time slot sequences. The different optical TDM signals have respective different wavelengths. During a first time slot, the received multiple optical TDM signals are switched to an optical reception branch. At the reception branch, different respective delays are applied to the different optical TDM signals in dependence on their respective wavelengths. The different respective delays cause a non-overlap in time of the respective optical data packets, which are carried by the respective optical TDM signals within this first time slot. The step of applying the different respective delays to the different optical TDM signals is carried out using a delay unit. Furthermore, two or more of the respective optical data packets are received, using a tunable receiver.

## Description

### Field of the Invention

The invention relates to the field of optical data transmission

### Background

In recent years, the technology of transmitting so-called optical data packets in a wavelength division multiplex (WDM) optical network has gained increased attention.

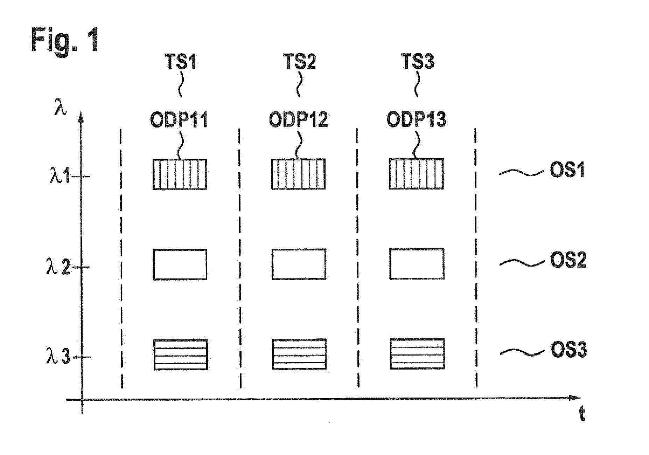

Figure 1 shows a set of optical signals OS.

The set OS is in this example made up of optical time division multiplex (TDM) signals OS1, OS2 and OS3. The signal OS1 contains a sequence of optical data packets ODP11, ODP12, ODP13. The signal OS1 has a wavelength λ1, wherein the signal OS2 has a wavelength λ2 and the signal OS3 has a wavelength λ3. The signal OS1 carries the optical data packets ODP11, ODP12, ODP13 within the respective sequence of time slots TS1, TS2, TS3. Furthermore, the signals OS2 and OS3 carry respective optical data packet sequences within respective time slot sequences, which are synchronous to the time slot sequence of the signal OS1.

In the example given in Figure 1, each of the signals OS1, OS2 and OS3 carry a respective sequence of optical data packets, wherein the number of data packets is equal to 3. This choice of the number of data packets as 3 is only an example, and it is clearly understood by persons skilled in the art, that the signals OS1, OS2, OS3 may contain any multiple number of data packets as respective data packet sequences within respective time slot sequences. Furthermore, the number of different signals OS1, OS2, OS3 is chosen only exemplarily and may be different.

Optical data packets as shown in Figure 1 may be transmitted from one optical node to another optical node of an optical network, wherein not all optical data packets may be carrying data that is assigned to the receiving node. The receiving node may receive data only within a subset of data packets, and it may transmit received data packets to an even further optical node, which itself may then detect or receive other optical data packets for the purpose of data transmission.

Different optical nodes within an optical network may derive information, that indicates which respective data packets carry data that are supposed to be received by the respective optical node. This derivation may be varied out, by analyzing an optical control channel, which is not explicitly shown in Figure 1. The optical control channel then may indicate an assignment of specific optical data packets to specific optical nodes present within the optical network.

One example of an optical network employing data transmission as shown in Figure 1 is preferably an optical ring network.

Within a ring network, an optical node may act as a so-called packet optical add/drop multiplexing node (POADM node). Such a node may drop specific data packets that are supposed to be received by the respective optical node, while the node may also add further optical data packets for further transmission at those packet positions, within which the dropped optical data packets were present.

Optical data packets, which are not dropped by the respective optical node, may then directly transit for means of transmission to another following optical node, which preferably is also a POADM node. Such data transmission allows energy saving, since data transmission by means of optical data packets, which are simply transmitted by means of transition, do not have to be regenerated at the node, at which these optical data packets transit.

Data transmission by means of an optical data packet may be carried out exploiting a coherent transmission and reception scheme. In such a coherent scheme, the amplitude and/or the phase of the optical signal carrying the optical data packet may be modulated in accordance to a constellation scheme that corresponds to the coherent scheme. Prominent examples of such constellation schemes for coherent data transmission are for example binary phase shift scheme (BPSK), quaternary phase shift scheme (QPSK) or sixteen quadrature amplitude modulation (16 QAM). The data transmission may be extended for an increased data rate, by preferably applying also the principle of polarization division multiplexing (PDM).

When receiving at an optical node data by means of a coherent reception scheme, a tunable receiver has to be tuned to that carrier frequency, at which the optical data packet shall be received. Preferably, the carrier frequency is equal to the optical signal carrying the optical data packet. When employing only one tunable receiver within a local oscillator, which is tuned to the carrier frequency, this implies, that within one time slot only one optical data packet out of the different optical data packets received via the different optical signals within this same time slot may be received. Such a reception may be also called a detection of an optical data packet.

### Summary

Proposed is a method of optical data transmission. The method comprises different steps.

Multiple optical TDM signals are received. The multiple optical TDM signals carry respective optical data packet sequences within respective time slot sequences. Preferably, the time slot sequences are synchronous to each other. The different optical TDM signals have respective different wavelengths.

During a first time slot, the received multiple optical TDM signals are switched to an optical reception branch. At the reception branch, different respective delays are applied to the different optical TDM signals in dependence on their respective wavelengths. The different respective delays cause a non-overlap in time of the respective optical data packets, which are carried by the respective optical TDM signals within this first time slot. The step of applying the different respective delays to the different optical TDM signals is carried out using a delay unit.

Furthermore, two or more of the respective optical data packets are received, using a tunable receiver. Preferably, the tunable receiver is one same tunable receiver.

In order to grasp the advantages of the proposed method, the following aspects have to be taken into consideration.

As it was previously mentioned, when using only one tunable receiver with one local oscillator, for receiving optical data packets from different optical TDM signals of different wavelengths, this implies, that the tunable receiver may be tuned only to one specific wavelength within a specific time slot, for receiving data via an optical data packet of an optical signal having this specific wavelength. Thus, if no further actions are taken, another optical data packet of another optical signal having another wavelength may not be received within the same time slot using this same tunable receiver.

By applying different respective delays to the optical TDM signals independence on their respective wavelengths, such that the respective optical data packets carried within a same first time slot by the respective optical TDM signals do not overlap, it is achieved, that the tunable receiver may sequentially receive two or more different optical data packets, one after another, by tuning the tunable receiver over the different wavelengths, at which the optical data packets are carried by the different optical TDM signals. Thus, it becomes possible, to receive at an optical node multiple optical data packets, which were carried by the different optical TDM signals within a same time slot.

Furthermore, by switching the different optical TDM signals towards the reception branch during the first time slot, low optical coupling is needed, which in turn avoids losses, that would be caused by such optical coupling. In other words, by switching the optical TDM signals towards the transmission branch, losses are reduced by the proposed method compared to other methods, in which the optical TDM signals are split towards a receiving branch. This in turn allows to cascade a higher number of optical nodes in an optical network.

### Brief description of the drawings

Figure 1 shows different optical TDM signals carrying respective optical data packet sequences within respective synchronous time slot sequences.
Figure 2 shows an optical data transmission device according to the prior art.
Figure 3 shows a proposed optical data transmission device according to an embodiment.
Figure 4a shows a proposed delay unit according to a first embodiment.
Figure 4b shows a proposed delay unit according to a further embodiment.

### Description of embodiments

Figure 1 shows different optical signals OS1, OS2, OS3 carrying respective optical data packet sequences within respective time slot sequences, as it has been described in detail previously above.

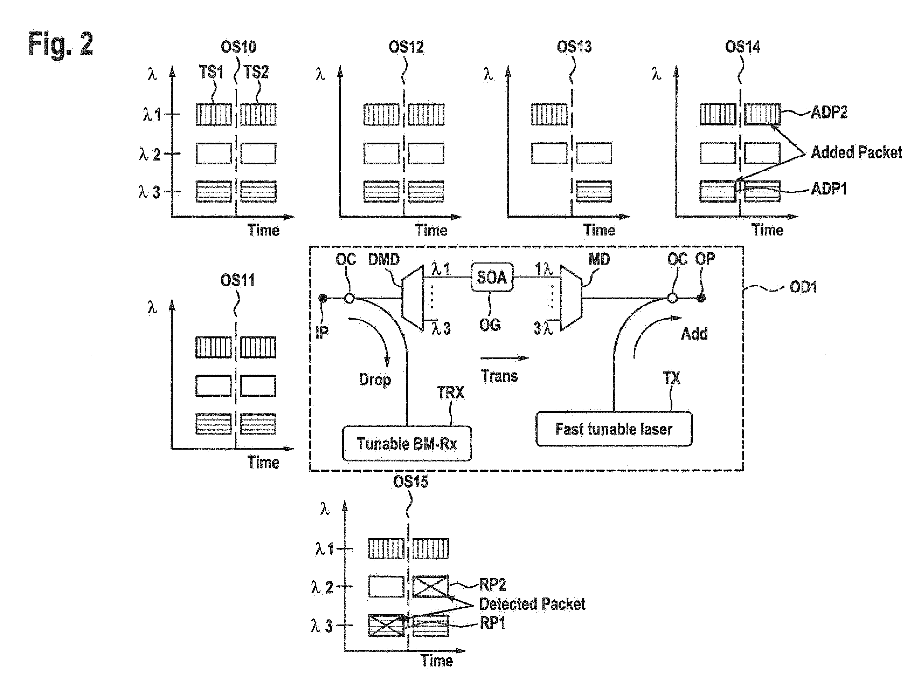

Figure 2 shows an optical data transmission device OD2 according to the prior art together with different sets of optical signals.

A set of optical signals OS10 is shown on the upper left hand side of Figure 2. The set of signals OS10 is received at an input IP of the device OD1. This set OS10 may be considered as a subset of the set OS shown previously in Figure 1. The set OS10 contains optical data packets within the time slots TS1 and TS2, as previously described with regard to the optical signals shown in Figure 1.

The multiple optical TDM signals contained within the set of signals OS10 are received at the device OD1. Using an optical coupler OC, at least a part of the signal energy of the signals shown in the set OS10 is dropped towards a tunable receiver TRX. This dropping generates a set of optical signals shown as the set OS11.

The tunable receiver TRX preferably contains a local oscillator, which may be tuned to one of the wavelengths of the optical TDM signals for the purpose of coherent reception. For example, during the first time slot TS1, the tunable receiver TRX is tuned to the wavelength λ3, such that an optical data packet shown as the received data packet RP1 is received and detected within this first time slot TS1. Furthermore, during the second time slot TS2, the tunable receiver TRX is tuned in its local oscillator to the wavelength λ2, such that the optical data packet shown as the received data packet RP2 is received and detected. As it is evident, when using only one tunable receiver TRX with one local oscillator, there may be received and detected only one optical data packet within a respective time slot.

The coupler OC provides a set of optical signals shown as the set OS12 towards an optical de-multiplexing device DMD. This de-multiplexing device DMD is preferably a WDM de-multiplexing device in the optical domain.

The de-multiplexing device DMD provides the signals of the different wavelengths λ1, ..., λ3 to respective optical gates OG. In this example, only one optical gate OG is shown for the one wavelength λ1. Further respective optical gates may be provided for further respective wavelength signals. An optical gate OG is closed during a specific time slot in the case, that an optical data packet should be inserted later on by the device OD1 within the respective time slot and at the respective wavelength, at which the optical gate OG acts. The optical gate OG is closed during the specific time slot in order to remove an incoming optical packet within the respective time slot and at the respective wavelength.

The different signals of the different wavelengths λ1, ..., λ3 are received from the respective optical gates OG and then multiplexed by a multiplexing device MD. Preferably, the multiplexing device MD is a WDM multiplexing device in the optical domain.

In the example, that an optical data packet should be inserted later on within the first time slot TS1 at the wavelength λ3, and that within the time slot TS2 an optical data packet should be inserted at the wavelength λ1, the resulting set of optical signals OS13 is shown on the upper hand of Figure 2.

The optical data transmission device OD1 contains furthermore a tunable laser TX, which may be tuned to one specific wavelength during one specific time slot. Thus, during the time slot TS1, the transmission device TX may generate an added optical data packet ADP1 at the wavelength λ3 within the time slot TS1. Furthermore, the transmission device TX may generate at the wavelength λ1 an added optical data packet ADP2 within the time slot TS2. Preferably, the transmission unit TX is coupled via an optical coupler OC to the multiplexing device MD. The resulting signals shown in the set OS14 on the upper right hand side of Figure 2 are then transmitted at the output OP of the device OD1.

The optical coupler OC on the left hand side of the device OD1 connecting the input port IP and the reception device TRX may cause losses of optical power, such that not all the optical power of the signals shown the set OS10 is still present within the signals shown in the set OS14 leaving the device OD1 at the output OP. Furthermore, using optical gates OG, which are preferably semi-conductor optical amplifiers SOA, may cause certain costs for manufacturing the device OD1.

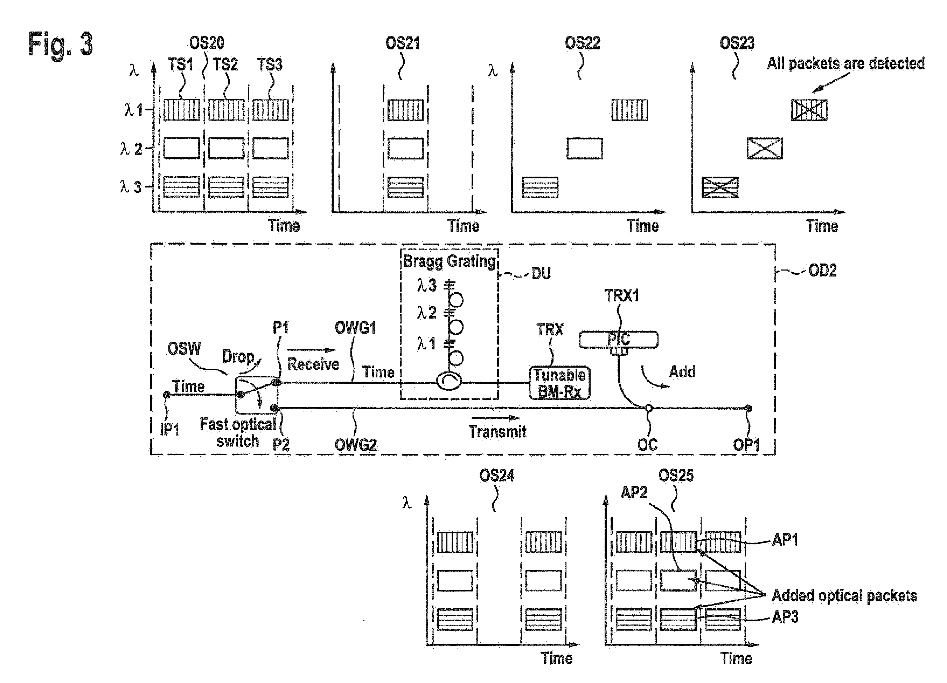

Figure 3 shows a proposed optical data transmission device OD2 according to preferred embodiment. At an input port IP1, a set OS20 of optical TDM signals is received. The set of signals OS20 is identical to the set of signals OS previously described with regard to Figure 1.

The device OD2 contains an optical switch OSW, which switches the received optical TDM signals within the time slot TS2 towards an optical reception branch. The optical reception branch preferably consists of optical wave guide OWG1, which connects a delay unit DU and a following tunable receiver TRX with an output port P1 of the optical switch OSW. The delay unit DU and the tunable receiver are preferably connected in a serial optical connection manner.

The optical switch OSW is controlled by the device OD2, such that the received optical TDM signals are switched within the time slot TS2 towards the reception branch.

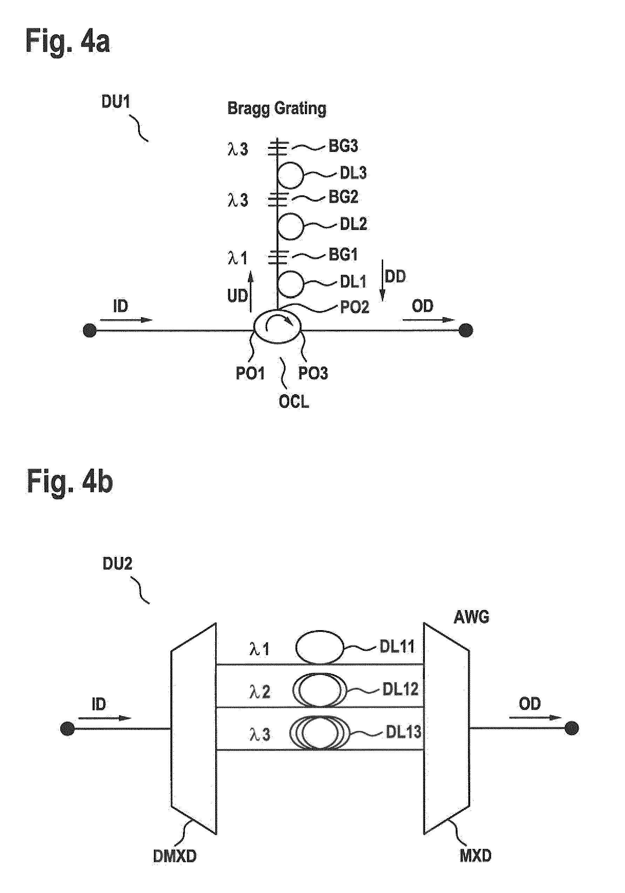

At the delay unit DU, different respective delays are applied to the different optical TDM signals in dependence on the respective wavelengths. The delay unit DU will be described in detail with regard to the Figures 4a and 4b later on. The set of signals resulting from the switching of the switch OSW is the set OS21 shown on the upper hand of Figure 3.

The effect of applying different respective delays can be seen as a set of signals OS22. The set of signals OS22 clearly shows, that the respective delays caused by the delay unit DU are such, that the optical data packets, which were carried by the respective optical TDM signals within the time slot TS2, are shifted, such that they do not overlap in time anymore. Such non-overlapping may be carried out, such that the optical data packets shown in the set OS22 do not overlap in an essential sense. In other words, overlapping powers of the optical data packets do not exceed a predefined threshold.

Preferably, the different respective delays are applied, such that the resulting time shifts of the optical data packets, as shown in the set OS22 in Figure 3, corresponds to a time spacing of time slots TS1, TS2, TS3 of the incoming optical TDM signals shown in the set OS2.

The set of signals OS22 proceeds along the optical wave guide OWG1 towards the tunable receiver TRX. The tunable receiver TRX performs coherent reception, as previously described with regard to Figure 2.

The tunable receiver TRX may now be tuned in its local oscillator, such that the optical data packets shown in the set OS22 may be received in a sequential manner one after another, as shown in the set OS23. Thus, by switching the optical TDM signals towards the optical reception branch and then applying the different respective delays to the different optical TDM signals in the described manner, it is now achieved, that the optical data packets previously contained within the same time slot TS2 by means of the different optical TDM signals having different respective wavelengths λ1, λ2, λ3, can now be received using only one single tunable receiver TRX.

The optical switch OSW switches during other time slots TS1, TS3 the different optical TDM signals towards a transmission branch. This transmission branch is given in the device OD2 by means of an optical wave guide OWG2, which is connected to an output port OP1 of the optical switch, and furthermore an optical coupler OC connecting a transmission device TX1. Finally, the optical transmission branch ends at an output port OP1 of the device OD2.

The set of optical signals resulting from the switching of the switch OSW towards the transmission branch are shown as the set OS24. Thus, the optical data packets of the time slots TS1 and TS3 are switched to the optical transmission branch and are then transmitted at the output port OP1.

Furthermore, new optical data packets may be generated by the transmission unit TX1. Preferably, the transmission unit TX1 contains respective fixed wavelength emitters for generating respective added data packets AP1, AP2 and AP3, as shown in a set of signals OS25. These added data packets AP1, AP2 and AP3 are inserted into the set OS24 within that time slot TS2, within which the received optical data packets were previously contained. This leads to the set of overall transmitted signals as shown as the set OS25.

Preferably, the fixed wavelength emitters contained within the transmission unit TX1 are provided as a photonic integrated circuit PIC, which allows low cost production of the fixed wavelength emitters as a set.

By comparing the solution of the prior art given by the device OD1 shown in Figure 2 and the proposed device OD2 shown in Figure 3, it becomes clear, that due to the avoidance of using an optical coupler OC before the tunable receiver TRX, the proposed solution of an optical transmission device OD2 shown in Figure 3 does not experience signal losses, as the device OD2 shown in Figure 2.

Furthermore, due to the fact that the device OD2 shown in Figure 3 does not need optical de-multiplexing devices DMD and multiplexing devices MD, as shown in Figure 2, the absence of such devices avoids further losses of optical signals. Furthermore, due to the fact that no optical gate OG, as shown in Figure 2, is needed for removing optical data packets from the set of received optical TDM signals, this reduces furthermore the manufacturing costs of the device OD2 shown in Figure 3.

The optical switch OSW, the tunable receiver TRX and the transmitter TX1 are preferably controlled by a control unit of the device OS2, wherein this control unit is not explicitly shown in the Figure 2. The control unit receives control information via a control channel and derives from this control information, within which time slot the switch OSW shall switch the optical signal toward the reception branch. Furthermore, the control unit derives from this information, at which wavelengths and within which time slots the transmitter shall generate the new data packets AP1, ..., AP3. The control unit may then indicate via the control channel an assignment of the new data packets to specific optical nodes present within the optical network. Preferably, the control channel is provided in the form of an optical signal having a separate wavelength, which is different from the wavelengths of the optical signals OS20. Even more preferably, the the control channel is provided in the form of a separate control plane, in which case the device OD2 contains a control plane interface for communicating via the control plane.

Figure 4a shows a first embodiment of a delay unit DU1. Optical signals reach the delay unit DU1 in an incoming direction ID and are provided to a first port PO1 of an optical circulator OCL.

This circulator OCL provides signals from the port PO1 to a second port PO2. From the port PO2, the optical signals are transmitted in a direction UD, which may be considered for example an upwards direction. In this direction, the different optical TDM signals of different wavelengths are transmitted towards different Fiber Bragg Gratings BG1, BG2, BG3. The signals reach via a delay line DL1 the first Bragg Grating BG1, where an optical TDM signal of the wavelength λ1 is reflected by the Bragg Grating BG1, such that it travels towards the optical circulator OCL in a direction DD, which may be considered a downward direction. Thus, an optical TDM signal of the wavelength λ1 experiences a delay, which is equivalent to twice the delay caused by the delay line DL1.

Respective optical TDM signals of respective wavelengths λ2 and λ3 travel in the upward direction UD towards respective Bragg Gratings BG2 and BG3, at which they are reflected. Thus, an optical TDM signal of the wavelength λ2 experiences twice the delay given by the delay lines DL1 and DL2. An optical TDM signal of the wavelength λ3 experiences twice the delay given by the delay lines DL1, DL2 and DL3.

From the port PO2 of the circulator OCL, the signals are provided to a port PO3 of the circulator OCL, from where the signals travel in an outgoing direction OD.

Figure 4b shows another example of a delay unit DU2.

Signals coming in the incoming direction ID are de-multiplexed by a WDM de-multiplexer DMXD onto different branches made up of different respective delay lines DL11, DL12, DL13. Depending on the delay lines DL11, DL12 and DL13, the different signals of different wavelengths λ1, λ2, λ3, experience different respective delays.

The signals coming from the delay lines DL11, DL12 and DL13 are later on multiplexed again by a WDM multiplexer MXD, from where they leave the delay unit DU2 in an outgoing direction OD.

Comparing the delay units DU1 and DU2 of the Figures 4a and 4b, it has to be noted, that the overall length of the delay lines DL1, DL2 and DL3 with respect to the respective delay lines DL11, DL12 and DL13 of Figure 4b only have to be of half the length for causing the same delay, due to the fact, that the optical signals travel within the delay unit DU1 of Figure 4a twice along the delay lines DL1, DL2 and DL3.

## Claims

1. Method of optical data transmission,
comprising
receiving multiple optical time division multiplex (TDM) signals (OS) carrying respective optical data packet sequences (OS1, OS2, OS3) within respective time slot sequences, wherein said optical TDM signals (OS) have different respective wavelengths,
switching said optical TDM signals (OS20) during a first time slot (TS2) towards an optical reception branch ,
at said reception branch,
- applying different respective delays to said optical TDM signals in dependence on the respective wavelengths of said optical TDM signals (OS20), wherein said respective delays cause non-overlapping in time of those respective first optical data packets, which are carried by said optical TDM signals within said first time slot (TS2), using a delay unit (DU),
- receiving two or more of said first optical data packets, using a tunable receiver (TRX).

2. Method according to claim 1,
comprising furthermore
switching said optical TDM signals (OS20) during at least one other time slot (TS1, TS3), different from said first time slot (TS2), towards a transmission branch, and,
at said transmission branch, transmitting said other time slots (TS1, TS3) of said optical TDM signals (OS24).

3. Method according to claim 2,
comprising furthermore,
at said transmission branch,
- generating new optical data packets (AP1, AP2, AP3) at respective wavelengths corresponding to the respective wavelengths of the received optical TDM signals,
- inserting said new optical data packets (AP1, AP2, AP3) into said optical TDM signals within said first time slot (TS2).

4. Method according to claim 1,
wherein said different respective delays are applied to said optical TDM signals in dependence on the respective wavelengths of said optical TDM signals in the optical domain, using one or more Fiber Bragg Gratings (BG1, BG2, BG3) causing respective, different optical delays for said respective wavelengths.

5. Method according to claim 1,
wherein said different respective delays are applied to said optical TDM signals in dependence on the respective wavelengths of said optical TDM signals in the optical domain, using
- a wavelength division demultiplexing device (DMXD),
- respective different delay lines (DL11, DL12, DL13), and
- a wavelength divison mulitiplexing device (MXD).

6. Method according to claim 1,
wherein the step of receiving two or more of said first optical data packets is carried out, using a tunable local oscillator and a coherent detection scheme.

7. Method according to any of the claims 1 or 2,
wherein the steps of switching said optical TDM signals are carried out, using an optical switch (OSW).

8. Method according to claim 1,
wherein said different respective delays correspond to a time-spacing of said time slots (TS1, TS2, TS3).

9. Method according to claim 3,
wherein the step of generating said new optical data packets (AP1, AP2, AP3) is carried out, using respective fixed-wavelength emitters.

10. Optical data transmission device,
wherein said device (OD2) is operable
- to receive multiple optical time division multiplex (TDM) signals (OS) carrying respective optical data packet sequences (OS1, OS2, OS3) within respective time slot sequences, wherein said optical TDM signals (OS) have different respective wavelengths,
- to switch said optical TDM signals (OS20) during a first time slot (TS2) towards an optical reception branch of said device (OD2), using an optical switch (OSW),
- to apply different respective delays to said optical TDM signals in dependence on the respective wavelengths of said optical TDM signals (OS20), such that said respective delays cause non-overlapping in time of those respective first optical data packets, which are carried by said optical TDM signals within said first time slot (TS2), using an optical delay unit (DU), and
- to receive two or more of said first optical data packets, using a tunable receiver (TRX).

11. Optical data transmission device according to claim 1,
wherein said device is furthermore operable
- to switch said optical TDM signals (OS20) during at least one other time slot (TS1, TS3), different from said first time slot (TS2), towards a transmission branch of said device (OD2), and
- to transmit said other time slots (TS1, TS3) of said optical TDM signals.

12. Optical data transmission device according to claim 11,
wherein said device (OD2) is furthermore operable
- to generate new optical data packets (AP1, AP2, AP3) at respective wavelengths corresponding to said respective wavelengths of received optical TDM signals, using respective fixed-wavelength emitters, and
- to insert said new optical data packets (AP1, AP2, AP3) into said optical TDM signals within said first time slot (TS2), using an optical coupler (OC).

13. Optical data transmission device according to claim 10,
wherein said optical delay unit comprises one or more Fiber Bragg (BG1, BG2, BG3) Gratings causing different, respective optical delays for said respective wavelengths.

14. Optical data transmission device according to claim 10,
wherein said optical delay unit (DU) comprises
- a wavelength division demultiplexing device (MXD),
- respective different optical delay lines (DL11, DL12, DL13), and
- a wavelength divison mulitiplexing device (MXD),

15. Optical data transmission device according to claim 10,
wherein said tunable receiver (TRX) comprises a tunable local oscillator,
and wherein said tunable receiver (TRX) applies a coherent detection scheme.
